# EUROPÄISCHE PATENTSCHRIFT

(11) **EP 2 942 570 B1**
(45) Veröffentlichungstag und Bekanntmachung des Hinweises auf die Patenterteilung: **19.07.2023**
(21) Anmeldenummer: 15166211.1
(22) Anmeldetag: 04.05.2015
(51) Int. Cl.: F24D 11/02, F24D 19/10, H02S 40/44, F28D 20/00, F24D 18/00, F24D 101/20, F24D 101/40, F24D 103/13, F24D 103/17

(54) **GEOTHERMIEHEIZANLAGE**
GEOTHERMAL HEATING INSTALLATION
INSTALLATION DE CHAUFFAGE GÉOTHERMIQUE

(30) Priorität: 05.05.2014 DE 102014106217
(43) Veröffentlichungstag der Anmeldung: 11.11.2015
(73) Patentinhaber: Ameis, Tim, 22299 Hamburg (DE)
(72) Erfinder: Ameis, Tim, 22299 Hamburg (DE)
(74) Vertreter: Groth, Wieland

(56) Entgegenhaltungen:
- EP-A1- 2 479 503
- WO-A2-2010/147492
- DE-A1-102010 016 163
- DE-A1-102011 001 273
- DE-U1-202007 018 251
- DE-U1-202014 002 340

## Beschreibung

Die Erfindung betrifft ein Verfahren zur Beheizung einer Mehrzahl an Gebäuden gemäß dem Oberbegriff des Anspruchs 1 sowie ein Heizsystem für eine Mehrzahl an Gebäuden gemäß dem Oberbegriff des Anspruchs 4. Solch ein Verfahren und solch ein Heizsystem ist beispielsweise aus DE 20 2014 002340 U1 bekannt.

Zur Beheizung von Einfamilienhäusern sind sogenannte Nachtspeicherheizungen seit längerer Zeit bekannt. Nachtspeicherheizungen wandeln Strom, der in Zeiten günstiger Strompreise gewonnen wird, in Wärme um und speichern diese in Kachelöfen oder Wasserspeichern, um damit später eine Heizwirkung im Haus zu erzeugen. Nachtspeicherheizungen sind vor der Zeit der regenerativen Energien auf den Markt gekommen, um die fossilen Kraftwerke zu nächtlichen Stunden nicht so weit herunterfahren zu müssen Darüber hinaus ist aus der DE 103 43 544 A1 eine Kraftwerksanlage zur Nutzung der Wärme eines geothermischen Reservoirs bekannt. Dabei wird regenerativ erzeugter Strom in Wärme umgewandelt. Die Wärme kann in einem Erdspeicher gespeichert werden, um später wieder zur Stromerzeugung zurückgewonnen zu werden. Dabei handelt es sich um ein zentrales Stromkraftwerk, das für den dezentralen häuslichen Gebrauch nicht geeignet ist.

Es ist daher Aufgabe der Erfindung, ein Verfahren zur Beheizung einer Mehrzahl an Gebäuden zur Verfügung zu stellen, das dem unterschiedlichen Stromangebot öffentlicher Stromnetze Rechnung trägt und dennoch für den dezentralen häuslichen Einsatz geeignet ist.

In einem zweiten Aspekt ist es Aufgabe der Erfindung, ein Heizsystem für eine Mehrzahl an Gebäuden zur Verfügung zu stellen, das sich zur Durchführung des erfindungsgemäßen Verfahrens eignet.

Die Aufgabe wird in ihrem ersten Aspekt durch ein Verfahren des Anspruchs 1 gelöst. Erfindungsgemäß wird elektrische Energie, die vorzugsweise durch Windkraftanlagen oder Photovoltaikanlagen zentral erzeugt wird und naturgemäß über die Zeit erheblichen Schwankungen unterworfen ist, durch Umwandlung in Wärme dezentral im Erdboden direkt beim Endverbraucher gespeichert. Die dort im Erdboden gespeicherte Energie kann bei Bedarf durch Wärmepumpen aus dem Erdboden wiedergewonnen werden.

Zur Durchführung des erfindungsgemäßen Verfahrens wird eine Mehrzahl an Gebäuden mit jeweils einer Geothermieanlage versehen, die jeweils eine Wärmepumpe aufweist, die eine Erdbodenschleife und eine Hausschleife miteinander koppelt. In dem Gebäude ist darüber hinaus ein Wärmeerzeuger angeordnet, der mit dem dem öffentlichen Stromnetz entnommenen Strom betrieben wird.

Der Strom wird vorzugsweise zentral erzeugt und in das öffentliche Stromnetz eingespeist. Der Strom wird insbesondere durch Solaranlagen und Windräder erzeugt, die flächendeckend vorhanden sind und deren erzeugter Strom in ein öffentliches Stromnetz eingespeist wird. Natürlich ist hier unter einem öffentlichen Stromnetz ein größeres Stromnetz zu verstehen, das eine Mehrzahl an Gebäuden versorgt. Es kann im juristischen Sinne auch privat sein.

Der Begriff des Gebäudes ist hier allgemein zu verstehen, es kann sich um Häuser, aber auch um Swimmingpools, Schwimmbäder, aber auch Felder, insbesondere Spargelfelder handeln. Letztere werden erwärmt, um die Erntesaison zu verlängern.

Der Wärmeerzeuger erwärmt ein Wärmemedium der Erdbodenschleife. Dabei kann die Erwärmung des Wärmemediums direkt erfolgen, indem beispielsweise das Wärmemedium der Erdbodenschleife an dem Wärmeerzeuger vorbeiströmt oder durch ihn hindurchströmt und dabei Wärme aufnimmt. Es ist aber auch denkbar, dass der Wärmeerzeuger zunächst ein anderes Wärmemedium, beispielsweise ein Wärmemedium des Wärmepumpenkreislaufs erwärmt und der Wärmepumpenkreislauf Wärme an das Wärmemedium des Erdbodenkreislaufs abgibt, so dass eine indirekte Erwärmung des Wärmemediums des Erdbodenkreislaufs stattfindet. Das Wärmemedium wird auf eine Temperatur oberhalb einer Erdbodentemperatur erwärmt, und das Wärmemedium wird der Erdbodenschleife zugeführt und vorzugsweise durch sie hindurchgeführt, und über die Erdbodenschleife wird Wärme zur Speicherung an den Erdboden abgegeben.

Der Begriff des Erdbodens ist hier weit zu verstehen. Es kann sich um reines Erdreich handeln, aber auch um Erdreich mit Grundwasser- oder Wasserspeicheranteilen oder sogar ausschließlich um Wasser handeln. Der Erdboden kann auch Aquiferspeicher umfassen. Das sind unterirdische natürliche Wasserbecken.

Nach der Speicherung der Wärme im Erdboden wird die Wärme dem Erdboden nachfolgend über die Erdbodenschleife wieder entzogen und der Hausschleife zugeführt. Von da aus wird die Wärme zur Beheizung des Hauses oder auch zur Trinkwassererwärmung genutzt.

Der Wärmeerzeuger wird wahlweise an die Erdbodenschleife oder die Hausschleife angeschlossen. Durch den wahlweisen Anschluss ist es möglich, den in Wärme umgewandelten elektrischen Strom bei Wahl der Verbindung zur Erdbodenschleife als Wärme im Erdboden zu speichern und bei Wahl der Verbindung zur Hausschleife zur Erwärmung des Hauses zu nutzen.

Der Wärmeerzeuger wird entweder durch sekundäre steuerbare Ventile über sekundäre Verbindungsleitungen mit der Hausschleife verbunden, während primäre Verbindungsleitungen mit der Erdbodenschleife durch primäre steuerbare Ventile unterbrochen werden. Oder der Wärmeerzeuger wird durch die primären steuerbaren Ventile über die primären Verbindungsleitungen mit der Erdbodenschleife verbunden, während die sekundären Verbindungsleitungen mit der Hausschleife durch die sekundären steuerbaren Ventile unterbrochen werden.

Die primären und sekundären steuerbaren Ventile ermöglichen es somit, den Wärmeerzeuger entweder zum Wärmetransport an die Hausschleife zu koppeln oder wahlweise den Wärmeerzeuger zum Wärmetransport an die Erdbodenschleife zu koppeln. Im ersten Fall wird die Wärme direkt zur Erwärmung der Hausschleife und damit des Hauses verwendet. Im zweiten Fall wird die Wärme im Erdboden gespeichert.

Die primären und sekundären steuerbaren Ventile können in eine erste Stellung geschaltet werden, in der sie die Erdbodenschleife bzw. die Hausschleife schließen und die Wärmepumpe eingeschaltet wird. Nach Abschalten des Wärmeerzeugers werden die sekundären steuerbaren Ventile der Hausschleife in Richtung der Hausschleife geöffnet und in Richtung des Wärmeerzeugers geschlossen, und die primären steuerbaren Ventile der Erdbodenschleife werden zur Ausbildung einer geschlossenen Erdbodenschleife geöffnet und zum Wärmeerzeuger hin geschlossen. Dadurch entstehen in üblicher Weise durch die Erdbodenschleife ein Primärkreislauf und durch die Hausschleife ein Sekundärkreislauf der Wärmepumpe, die dann auch als solche in herkömmlicher Weise betrieben werden kann und die vorher im Erdboden gespeicherte Energie rückgewinnen kann.

Vorzugsweise wird ein Zeitraum vorgegeben, und ein Energieeintrag in den Erdboden wird mittels eines Wärmemengenzählers gemessen und einem Energieaustrag aus dem Erdboden, der mittels eines weiteren Wärmemengenzählers gemessen wird, angeglichen. Auf diese Weise wird eine ausgeglichene Energiebilanz erzielt.

In einer weiteren Ausführungsform des erfindungsgemäßen Verfahrens wird der Wärmeerzeuger in die Erdbodenschleife integriert und das Wärmemedium der Erdbodenschleife erwärmt.

Erfindungsgemäß wird der Wärmeerzeuger in einen Wärmepumpenkreislauf integriert, und die Wärme wird über einen Verflüssiger an die Hausschleife abgegeben, um das Haus zu heizen. Es sind auch sekundäre steuerbare Ventile vorgesehen, die über sekundäre Verbindungsleitungen zwischen den sekundären steuerbaren Ventilen und den primären steuerbaren Ventilen der Erdbodenschleife eine Verbindung zur Erdbodenschleife herstellen und somit Wärme aus dem Wärmepumpenkreislauf im Erdboden gespeichert werden kann.

Die Wärmepumpe weist eine Verträglichkeitstemperatur auf, die nicht überschritten werden sollte. Zur Begrenzung der Temperatur des Wärmemediums der Erdbodenschleife sind ein Temperaturfühler in der Erdbodenschleife und ein Bypass zum Kurzschließen der Erdbodenschleife vorgesehen, die mittels der intelligenten Steuerung verbunden sind. Bei Überschreiten der Verträglichkeitstemperatur wird der Bypass geöffnet und der Verdampfer so vor weiterem, zu heißem Wärmemediumdurchfluss geschützt.

Es ist sogar denkbar, den erzeugten Strom zur Herstellung von Heizpatronen zu verwenden. Heizpatronen können dann zur direkten Erwärmung des Erdbodens verwendet werden. Je nach Wirkungsgrad, könnte es eine interessante Variante sein, da man sich Steuerungstechnik ersparen kann. Es müssten nur der intelligente Stromzähler sowie ein Thermometer vorhanden sein und der Bypass zur Begrenzung der Temperatur der Erdbodenschleife auf die Verträglichkeitstemperatur.

In ihrem zweiten Aspekt wird die Aufgabe durch ein Heizsystem mit den Merkmalen des Anspruchs 4 gelöst.

Das erfindungsgemäße Heizsystem ist für eine Mehrzahl an Gebäuden vorgesehen und zur Durchführung eines der oben genannten Verfahren geeignet. Das Heizsystem weist einen zentralen Stromerzeuger wie Windräder oder Solaranlagen auf und eine Geothermieheizanlage in jedem der Gebäude mit jeweils einer Erdbodenschleife und einer Hausschleife, die über eine Wärmepumpe miteinander gekoppelt sind, und einem Wärmeerzeuger, der einen Anschluss an ein öffentliches Stromnetz aufweist, wobei auch der zentrale Stromerzeuger einen Anschluss an das öffentliche Stromnetz aufweist.

Erfindungsgemäß steht der Wärmeerzeuger mit der Erdbodenschleife wärmemediumleitend in Verbindung. Somit ist es erfindungsgemäß möglich, aus dem öffentlichen Stromnetz gewonnenen Strom in Wärme umzuwandeln und über die Erdbodenschleife in den Erdboden abzugeben. Der Wärmeerzeuger ist über sekundäre Verbindungsleitungen wärmemediumleitend mit der Hausschleife verbunden und über primäre Verbindungsleitungen wärmemediumleitend mit der Erdbodenschleife verbunden.

Vorzugsweise sind herkömmliche Wärmepumpen mit Zusatzbauteilen zur erfindungsgemäßen Geothermieanlage nachrüstbar.

Erfindungsgemäß sind primäre steuerbare Ventile zur Unterbrechung des Wärmemediumflusses in der primären Verbindungsleitung vorgesehen und sekundäre steuerbare Ventile zur Unterbrechung des Wärmemediumflusses in der sekundären Verbindungsleitung vorgesehen.

Gemäß der Erfindung ist der Wärmeerzeuger in einem Wärmemediumkreislauf der Wärmepumpe vorgesehen, und die Hausschleife und die Erdbodenschleife sind über zwei Verbindungsleitungen miteinander wärmemediumleitend verbunden. Der Wärmeerzeuger ist als Verdichter ausgebildet. Die Verbindungsleitungen sind dabei durch primäre und sekundäre steuerbare Ventile verschließbar.

Am Wärmeerzeuger kann ein Wärmemengenzähler und in der Hausschleife ein weiterer Wärmemengenzähler vorgesehen sein, die zur Erzielung einer ausgeglichenen Energiebilanz miteinander vergleichbar sind.

Vorzugsweise sind ein Bypass in der Erdbodenschleife und ein Temperaturfühler in der Erdbodenschleife und ein weiterer Temperaturfühler in der sekundären Verbindungsleitung vorgesehen. Diese gestatten es, in Verbindung mit einer intelligenten Steuerung bei Überschreiten einer Verträglichkeitstemperatur den Bypass zu öffnen und die Temperatur im Verdampfer herabzusetzen.

Die Erfindung wird anhand von zwei Ausführungsbeispielen in drei Figuren beschrieben. Dabei zeigen:
- Fig. 1: einen schematischen Aufbau eines erfindungsgemäßen Heizsystems für vier Häuser,
- Fig. 2: eine Geothermieheizanlage eines Hauses in einer Ausführungsform, die nicht unter den Wortlaut der Ansprüche fällt,
- Fig. 3: eine erfindungsgemäße Geothermieheizanlage eines Hauses.

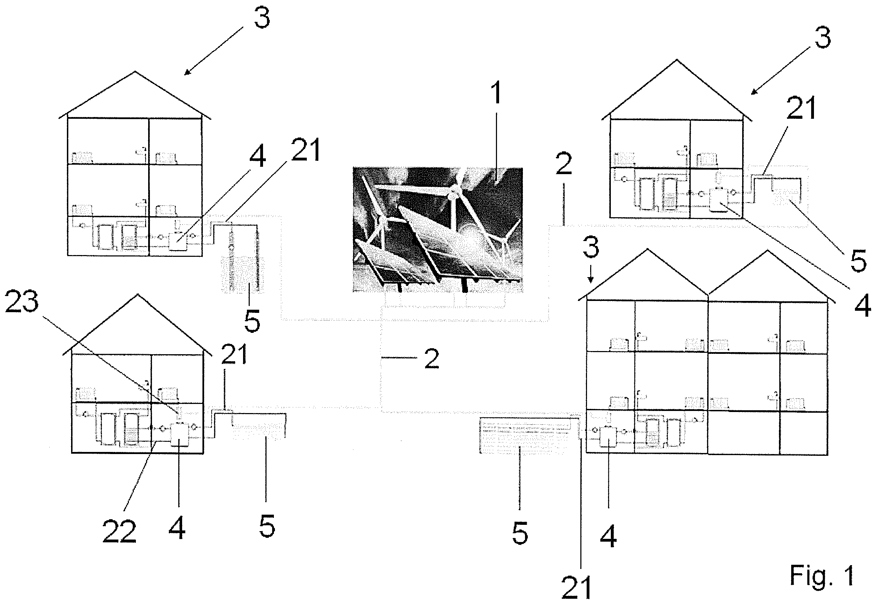

Fig. 1 zeigt einen zentralen Stromerzeuger 1. Bei dem Stromerzeuger 1 handelt es sich um einen Windpark oder einen Solarpark. Es sind auch Kombinationen von beiden denkbar. Grundsätzlich ist die Art des Stromerzeugers 1 nicht eingeschränkt, es kann sich auch um herkömmliche fossile Kraftwerke handeln. Allerdings ist sowohl das erfindungsgemäße Verfahren als auch das erfindungsgemäße Heizsystem bevorzugt im Zusammenhang mit regenerativen Stromerzeugern 1 anwendbar, die sich dadurch auszeichnen, dass die Stromerzeugung 1 nicht streng im Voraus planbar ist, sondern in Abhängigkeit von den Umweltbedingungen wie Windstärke oder Sonnenscheindauer über den Tag und den Jahreszeiten erheblichen Schwankungen unterworfen ist. Somit kommt es in einigen Zeitperioden zu einer Stromüberproduktion, zu sogenannten Strompeaks, während in anderen Zeitperioden Strommangel, sogenannte Stromsenken auftreten. Der Strom wird in ein öffentliches Stromnetz 2 eingespeist.

Die Erfindung nutzt die in der Erzeugung entstehenden Stromschwankungen durch die in den einzelnen Häusern 3 eingebauten Geothermieheizanlagen 4 aus. Der während Strompeaks durch den zentralen Stromerzeuger 1 erzeugte, in das öffentliche Netz 2 eingespeiste und im Haus 3 abgenommene überschüssige Strom wird in Wärme umgewandelt und in einem Erdboden 5 in der Nähe des jeweiligen Hauses 3 durch Erwärmung des Erdbodens 5 gespeichert, bei Bedarf wird die im Erdboden 5 beim jeweiligen Haus 3 gespeicherte Wärme über die zugehörige Geothermieheizanlage 4 zur Erwärmung des Hauses 3 verwendet. In Zeiten der Stromsenken wird weniger elektrische Energie benötigt, um die Wärmepumpe 20 im gewöhnlichen Modus zu betreiben.

In Fig. 1 sind beispielhaft vier Häuser 3 dargestellt. Dabei kann es sich um Einfamilien- oder Mehrfamilienhäuser handeln. Jedes der Häuser 3 weist eine Geothermieheizanlage 4 auf mit jeweils einer Wärmepumpe 20 und jeweils einem eine Erdbodenschleife 21 aufweisenden Primärkreislauf und einem eine Hausschleife 22 aufweisenden Sekundärkreislauf. Unter der Erdbodenschleife 21 ist eine Rohrleitung oder ein Rohrleitungssystem zu verstehen, die oder das von der Wärmepumpe 20 abgeht, durch den Erdboden 5 geführt ist und zur Wärmepumpe 20 zurück verläuft. In der Erdbodenschleife 21 fließt ein Wärmemedium, z. B. Wasser mit Zusätzen. Das Wärmemedium ist frostsicher und kann ein Wasser-Glykolgemisch sein. Die Hausschleife 22 besteht hingegen aus einem in der Regel stark verzweigten Rohrsystem, in dem ein Wärmemedium, das ebenfalls Wasser sein kann, fließt und die im Wärmemedium gespeicherte Wärme über Heizkörper an die Wohnräume abgibt. Gegenüber herkömmlichen Geothermieheizanlagen weist die erfindungsgemäße Geothermieheizanlage 4 einen Wärmeerzeuger 23 auf, der das in der Geothermieheizanlage 4 fließende Wärmemedium zusätzlich mittels des zentral gewonnenen Stromes erwärmt.

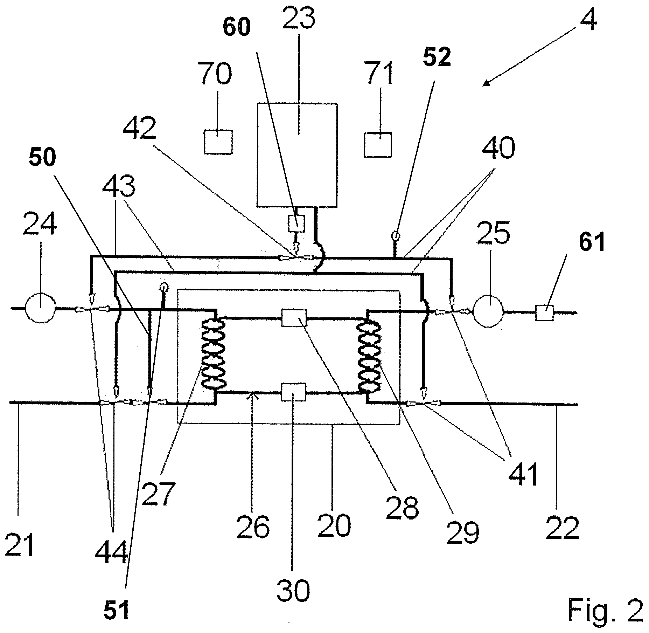

Fig. 2 zeigt eine Ausführungsform in einer Prinzipansicht einer Geothermieheizanlage 4, welche nicht unter den Wortlaut der Ansprüche fällt, eines der in Fig. 1 dargestellten Häuser 3. Die Geothermieheizanlage 4 weist in üblicher Weise die Erdbodenschleife 21 auf. Dabei handelt es sich um ein Rohrleitungssystem, in dem das Wärmemedium zirkuliert, das von einer primären Pumpe 24 durch die Erdbodenschleife 21 angetrieben wird. Idealerweise sollte die Fließrichtung des Wärmemediums der Erdbodenschleife 21 bei Wärmezufuhr in der einen Fließrichtung und bei Wärmeentzug durch die Wärmepumpe 20 in die entgegengesetzte Fließrichtung erfolgen. Es findet also ein Umschalten der Fließrichtung bei Wechseln des Betriebsmodus der Geothermieheizanlage 4 statt. Auf der Hausseite ist die Hausschleife 22 vorgesehen. Dabei handelt es sich ebenfalls um ein Rohrleitungssystem, in dem ein Wärmemedium fließt, das durch eine sekundäre Pumpe 25 angetrieben wird.

Die Erdbodenschleife 21 und die Hausschleife 22 sind über die Wärmepumpe 20 wärmeleitend miteinander gekoppelt. Die Wärmepumpe 20 umfasst einen Wärmetauscherkreislauf 26, in dem ein Wärmetauschermedium zirkuliert. Der Wärmetauscherkreislauf 26 ist von der Erdbodenschleife 21 und der Haussschleife 22 separiert, und zwar in dem Sinne, dass kein Austausch der Wärmemedien zwischen dem Wärmetauscherkreislauf 26 und einem der anderen beiden Kreisläufe stattfindet. Die Wärmepumpe 20 umfasst einen Verdampfer 27. Das Wärmetauschermedium gelangt in flüssigem Zustand in den Verdampfer 27 und wird dort verdampft und nimmt durch das Verdampfen Wärme aus dem Wärmemedium der Erdbodenschleife 21 auf. Die Temperaturen sind dabei derart eingestellt, dass die Temperatur des Wärmetauschermediums in Fließrichtung vor dem Verdampfer 27 unterhalb der Temperatur des Wärmemediums der Erdbodenschleife 21 in Fließrichtung vor dem Eintritt in den Verdampfer 27 liegt. Das verdampfte Wärmetauschermedium gelangt auf seiner Zirkulation in einen Verdichter 28 und wird dort verdichtet, wodurch sich die Temperatur des gasförmigen Wärmetauschermediums weiter erhöht. Danach tritt das gasförmige Wärmetauschermedium in einen Verflüssiger 29. In dem Verflüssiger 29 gibt das Wärmetauschermedium Wärme an das Wärmemedium des Hauskreislaufes 22 ab. Im Verflüssiger 29 werden die Temperaturen so eingestellt, dass die Temperatur des gasförmigen Wärmeträgermediums vor dem Eintritt in den Verflüssiger 29 höher ist als die Temperatur des Wärmemediums des Hauskreislaufs 22 vor dessen Eintritt in den Verflüssiger 29. Aufgrund des Temperaturgradienten entsteht ein Wärmestrom vom Wärmetauschermedium in das Wärmemedium der Hausschleife 22.

Durch die Wärmeabgabe verflüssigt sich das Wärmeträgermedium und gelangt in flüssigem Zustand in eine Drossel 30. In der Drossel 30 wird das flüssige Wärmeträgermedium entspannt, wodurch sich die Temperatur weiter absenkt, und das niedrig temperierte flüssige Wärmeträgermedium gelangt an den Anfang des Kreislaufs zum Verdampfer 27.

Die Geothermieheizanlage 4 umfasst darüber hinaus den elektrischen Wärmeerzeuger 23, der in Form eines Durchlauferhitzers oder Tauchsieders ausgebildet ist. Der Wärmeerzeuger 23 ist an das öffentliche Stromnetz 2 angeschlossen, das mit Strom aus regenerativen Quellen gespeist wird und daher, wie eingangs beschrieben, den zeitlichen Schwankungen unterworfen ist. Der Wärmeerzeuger 23 wird vorzugsweise mit Strom betrieben, der während der Strompeaks erzeugt wird und in das öffentliche Stromnetz 2 eingespeist wird.

Die Geothermieheizanlage 4 kann zum einen als Wärmepumpe 20 betrieben werden. Der Wärmepumpenmodus entspricht dem oben beschriebenen Verfahren, bei dem Wärme aus dem Erdboden 5 durch die Wärmepumpe 20 zur Erwärmung des Hauses in die Hausschleife 22 transportiert wird.

Die Geothermieanlage 4 kann jedoch auch in einem Heizmodus und in einem Speichermodus betrieben werden.

Im Heizmodus wird der Wärmeerzeuger 23 gemäß Fig. 1 über zwei sekundäre Verbindungsleitungen 40 wärmemediumleitend mit der Hausschleife 22 verbunden, und das Wärmemedium der Hausschleife 22 wird mittels der sekundären Pumpe 25 durch die Hausschleife 22 und den Wärmeerzeuger 23 gepumpt. Im Wärmeerzeuger 23 wird das Wärmemedium der Hausschleife 22 erwärmt, um das Haus auf eine Zimmertemperatur zu heizen. Die zwei sekundären Verbindungsleitungen 40 sind über zwei steuerbare sekundäre Ventile 41 an die Hausschleife 22 angeschlossen. Die beiden sekundären steuerbaren Ventile 41 können zwischen einer ersten Stellung, in der beide sekundäre steuerbare Ventile 41 die Hausschleife 22 mit der Wärmepumpe 20 wärmemediumleitend verbinden, und einer zweiten Stellung, in der beide sekundäre steuerbare Ventile 41 die Hausschleife 22 wärmemediumleitend mit dem Wärmeerzeuger 23 verbinden, hin und her geschaltet werden. Im Wärmepumpenmodus sind die beiden sekundären steuerbaren Ventile 41 in der ersten Stellung und im Heizmodus sind die beiden sekundären steuerbaren Ventile 41 in der zweiten Stellung. Ein direkt am Wärmeerzeuger 23 angeordnetes Richtungsventil 42 öffnet eine mediumleitende Verbindung über die sekundären Verbindungsleitungen 40 zur Hausschleife 22.

Im Speichermodus werden die beiden sekundären steuerbaren Ventile 41 in die erste Stellung gebracht. Vom Wärmeerzeuger 23 gehen zwei primäre Verbindungsleitungen 43 zur Erdbodenschleife 21 ab. Die beiden primären Verbindungsleitungen 43 sind über zwei primäre steuerbare Ventile 44 mit der Erdbodenschleife 21 verbunden. Die beiden primären steuerbaren Ventile 44 können ebenfalls zwischen einer ersten Stellung und einer zweiten Stellung hin und her geschaltet werden. In der ersten Stellung öffnen die beiden primären steuerbaren Ventile 44 die Erdbodenschleife 21 und unterbrechen die wärmemediumleitende Verbindung zu den beiden primären Verbindungsleitungen 43. In der zweiten Stellung öffnen die beiden primären steuerbaren Ventile 44 die wärmemediumleitende Verbindung zwischen der Erdbodenschleife 21 und den beiden primären Verbindungsleitungen 43.

Im Speichermodus wird das Wärmemedium der Erdbodenschleife 21 durch den Wärmeerzeuger 23 erwärmt, und die aufgenommene Wärme wird an den Erdboden 5 abgegeben und dort gespeichert. Dazu werden die beiden primären steuerbaren Ventile 44 in die zweite Stellung gebracht und das Richtungsventil 42 zur Erdbodenschleife 21 hin geöffnet. Das Wärmemedium wird mittels der primären Pumpe 24 durch die Erdbodenschleife 21, die beiden primären Verbindungsleitungen 43 und den Wärmeerzeuger 23 hindurch in Fließbewegung gehalten.

Im Speichermodus wird somit elektrische Energie, die bei günstigen Wetterbedingungen im Überschuss erzeugt wird, zur Erwärmung des Erdbodens 5 verwendet. Der Erdboden 5 stellt einen Wärmespeicher im Prinzip unendlicher Kapazität dar. Die Erdbodenschleife 21 ist günstigerweise so gelegt, dass sie oberhalb des Grundwasserspiegels angeordnet ist, so dass sicher kein Wärmeabtransport durch fließendes Grundwasser stattfindet. Die an den Erdboden 5 abgegebene Wärme kann dort längere Zeit gespeichert werden. Grundwasser kann aber grundsätzlich im Bereich der Erdbodenschleife 21 vorhanden sein, es sollte aber nicht fließen.

In Zeiten, in denen kein kostengünstiger Strom oder Stromüberschuss zur Verfügung steht, wird der Wärmeerzeuger 23 abgeschaltet, und die primären und sekundären steuerbaren Ventile 44, 41 werden in die ersten Stellungen geschaltet, so dass eine geschlossene Erdbodenschleife 21 und eine geschlossene Hausschleife 22 ausgebildet werden und die Wärmepumpe 20 bei Bedarf in herkömmlicher, eingangs beschriebener Weise die Erdwärme aufnehmen und zur Erwärmung des Hauses 3 ins Haus 3 transportieren kann.

Die Geothermieheizanlage 4 ist von einer intelligenten Steuerung 70 gesteuert. Die intelligente Steuerung 70 ist mit einem intelligenten Stromzähler 71 verknüpft, der neben dem Stromverbrauch auch die Kosten der Kilowattstunde erkennt und den Wärmeerzeuger 23 in Zeiten geringer Stromkosten oder Strompeaks anschaltet und in Zeiten hoher Stromkosten abschaltet unter Berücksichtigung, dass eine Mindesttemperatur im jeweiligen Haus 3 gewährleistet sein muss.

In einer in Fig. 2 nicht dargestellten ersten Abwandlung der Geothermieheizanlage 4 ist der Wärmeerzeuger 23 nicht separat über sekundäre und primäre Verbindungsleitungen 40, 43 wahlweise mit der Hausschleife 22 oder der Erdbodenschleife 21 verbindbar, sondern er ist in die Erdbodenschleife 21 integriert. Dabei kann der Wärmeerzeuger 23 in Fließrichtung des Wärmemediums der Erdbodenschleife 21 vor oder nach dem Verdampfer 27 in die Erdbodenschleife 21 integriert sein, so dass das Wärmemedium durch den Wärmeerzeuger 23 hindurchströmt und im Speichermodus bei angeschaltetem Wärmeerzeuger 23 erwärmt wird. Wenn der Verdampfer 27 abgeschaltet ist, läuft das Wärmemedium der Erdbodenschleife 21 durch den Verdampfer 27 hindurch. Durch Erhitzen mittels des in die Erdbodenschleife 21 integrierten Wärmeerzeugers 23 kann auf diese Weise elektrischer Strom in Wärme umgewandelt und im Erdboden 5 gespeichert werden, wenn die Geothermieheizanlage 4 im Speichermodus betrieben wird.

Nach Anschalten des Verdampfers 27 kann bei gleichzeitig angeschaltetem Wärmeerzeuger 23 über die Wärmepumpe 20 ein Wärmetransport aus dem Erdboden 5 in die Hausschleife 22 stattfinden. Die Geothermieheizanlage 4 wird im Heizmodus mit der Wärmepumpe 20 betrieben. Es ist auch möglich, den Wärmeerzeuger 23 einfach abzuschalten und die Geothermieheizanlage 4 in herkömmlicher Weise als Wärmepumpe 20 zu betreiben.

Fig. 2 zeigt auch einen Temperaturfühler 51 in der Erdbodenschleife 21, der mit einem Bypass 50 über die intelligente Steuerung 70 verbunden ist und die bei Überschreiten einer Verträglichkeitstemperatur den Bypass 50 öffnet, um den Verdampfer 27 zu schützen. Ein weiterer Temperaturfühler 52 ist in der Hausschleife vorgesehen.

In Fig. 2 sind auch ein Wärmemengenzähler 60 unmittelbar am Wärmeerzeuger 23 angeordnet sowie ein weiterer Wärmemengenzähler in der Hausschleife 22 angeordnet.

Durch Vergleich der beiden Wärmemengenzähler 60, 61 wird eine ausgeglichene Wärmebilanz über einen vorgegebenen Zeitraum eingestellt.

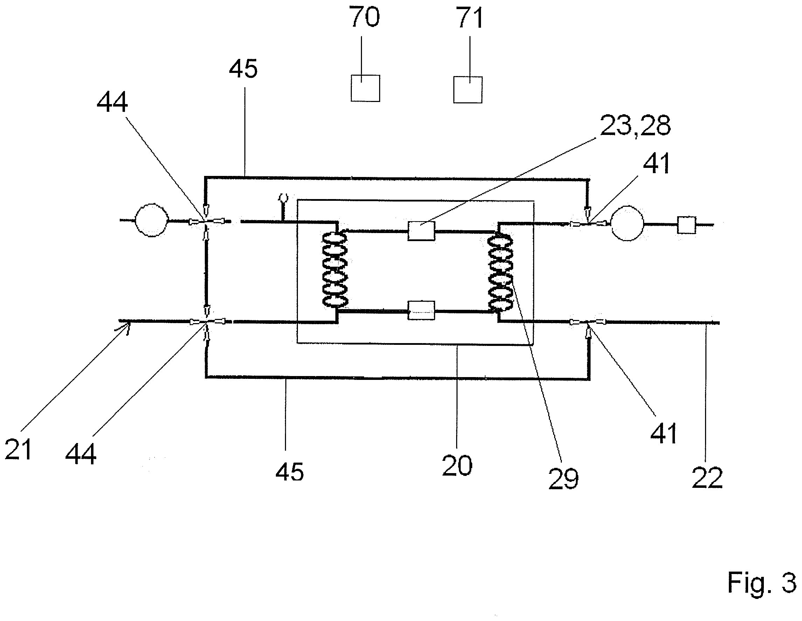

Fig. 3 zeigt eine Ausführungsform einer erfindungsgemäßen Geothermieheizanlage 4 eines der Häuser 3. Die Bezugszeichen bezeichnen hier die gleichen Bauteile wie in der ersten Ausführungsform gemäß Fig. 2. Der Wärmeerzeuger 23 fällt hier mit dem Verdichter 28 zusammen. Die Hausschleife 22 und die Erdbodenschleife 21 sind mittels primärer und sekundärer steuerbarer Ventile 44, 41 miteinander über Verbindungsleitungen 45 verbunden. Bei in der ersten Stellung geschalteten primären und sekundären steuerbaren Ventilen 44, 41 sowie einem Betrieb des Verdichters 28 in herkömmlicher Form wird die Geothermieheizanlage 4 als Wärmepumpe 20 betrieben. Es wird über die Erdbodenschleife 21 Wärme mittels der Wärmepumpe 20 an die Hausschleife 22 abgegeben.

Im Speichermodus wird der Verdichter 28 mit hoher Leistung betrieben und gibt über den Verflüssiger 29 Wärme an das Wärmemedium der Hausschleife 22 ab. Die sekundären steuerbaren Ventile 41 sind in der zweiten Stellung und schließen die Hausschleife 22 und öffnen die Verbindungsleitungen 45 zur Erdbodenschleife 21. Dadurch wird das erwärmte Wärmemedium über die primären steuerbaren Ventile 44 und die Verbindungsleitungen 45 je mittels der primären Pumpe 24 durch die Erdbodenschleife 21 und den Erdboden 5 gepumpt und gibt dort Wärme an den Erdboden 5 ab.

Die Geothermieheizanlage 4 kann auch im Heizmodus betrieben werden. Dabei sind die primären und sekundären steuerbaren Ventile 44, 41 in ihre erste Stellung geschaltet, so dass die Hausschleife 22 geöffnet ist und die mediumleitende Verbindung zu den Verbindungsleitungen 45 geschlossen ist. So kann über den wärmeerzeugenden Verdichter 23, 28 Wärme über den Verflüssiger 29 an die Hausschleife 22 abgegeben werden und das Haus 3 auf die gewünschte Solltemperatur geheizt werden.

### Bezugszeichenliste

- 1: zentraler Stromerzeuger
- 2: öffentliches Stromnetz
- 3: Häuser
- 4: Geothermieheizanlage
- 5: Erdboden
- 20: Wärmepumpe
- 21: Erdbodenschleife
- 22: Hausschleife
- 23: Wärmeerzeuger
- 24: primäre Pumpe
- 25: sekundäre Pumpe
- 26: Wärmetauscherkreislauf
- 27: Verdampfer
- 28: Verdichter
- 29: Verflüssiger
- 30: Drossel
- 40: sekundäre Verbindungsleitungen
- 41: sekundäre steuerbare Ventile
- 42: Richtungsventil
- 43: primäre Verbindungsleitungen
- 44: primäre steuerbare Ventile
- 45: Verbindungsleitungen
- 50: Bypass
- 51: Temperaturfühler
- 52: weiterer Temperaturfühler
- 60: Wärmemengenzähler
- 61: weiterer Wärmemengenzähler
- 70: intelligente Steuerung
- 71: intelligenter Stromzähler

## Patentansprüche

1. Verfahren zur Beheizung einer Mehrzahl an Gebäuden (3) mit jeweils einer Geothermieheizanlage (4) mit einer Wärmepumpe (20), die über einen Wärmepumpenkreislauf eine Erdbodenschleife (21) und eine Hausschleife (22) miteinander koppelt, und in dem Strom in ein öffentliches Stromnetz (2) eingespeist wird und Strom dem öffentlichen Stromnetz (2) entnommen wird und mit dem Strom ein Wärmeerzeuger (23) betrieben wird und der Wärmeerzeuger (23) ein Wärmemedium erwärmt und das Wärmemedium auf eine Temperatur oberhalb einer Erdbodentemperatur gebracht wird und Wärme der Erdbodenschleife (21) zugeführt wird und über die Erdbodenschleife (21) die Wärme zur Speicherung an den Erdboden (5) abgegeben wird, die dem Erdboden nachfolgend über die Erdbodenschleife (21) wieder entzogen wird, wobei die Wärme zunächst die Hausschleife (22) und nach Erreichen einer Solltemperatur im Haus (3) die Erdbodenschleife (21) erwärmt und der Wärmeerzeuger (23) in den Wärmepumpenkreislauf integriert wird und die Wärme über einen Verflüssiger (29) an die Hausschleife (22) abgegeben wird, **dadurch gekennzeichnet, dass** der Wärmeerzeuger (23) mit einem Verdichter (28) der Wärmepumpe (20) zusammenfällt und die Hausschleife (22) und die Erdbodenschleife (21) mittels primärer steuerbarer Ventile (44) und sekundärer steuerbarer Ventile (41) über Verbindungsleitungen (45) miteinander verbunden werden und in einem Speichermodus die sekundären steuerbaren Ventile (41) in eine zweite Stellung gebracht werden und die Hausschleife (22) schließen und die Verbindungsleitungen (45) zur Erdbodenschleife (21) öffnen, wodurch das erwärmte Wärmemedium über die primären steuerbaren Ventile (44) und die Verbindungsleitungen (45) je mittels einer primären Pumpe (24) durch die Erdbodenschleife (21) und den Erdboden (5) gepumpt wird und dort Wärme and den Erdboden abgeben wird und in einem Heizmodus die primären steuerbaren Ventile (44) und sekundären steuerbaren Ventile (41) in eine erste Stellung gebracht werden und die Hausschleife geöffnet wird und Verbindungsleitungen (45) geschlossen werden und Wärme über den Verflüssiger (29) an die Hausschleife abgegeben wird.

2. Verfahren nach Anspruch 1, **dadurch gekennzeichnet, dass** die Erdbodenschleife (21) durch einen Bypass (50) kurzgeschlossen werden kann, um eine Verträglichkeitstemperatur der Wärmepumpe (20) nicht zu überschreiten.

3. Verfahren nach einem der vorstehenden Ansprüche, **dadurch gekennzeichnet, dass** ein Zeitraum vorgegeben wird und ein Energieeintrag in den Erdboden (5) mittels eines Wärmemengenzählers (60) gemessen wird und einem Energieaustrag aus dem Erdboden (5), der mittels eines weiteren Wärmemengenzählers (61) gemessen wird, angeglichen wird.

4. Heizsystem für eine Mehrzahl an Gebäuden (3) zur Durchführung des Verfahrens nach Anspruch 1 mit einer Stromerzeugung und deren Anschluss an ein öffentliches Stromnetz (2) und einer Geothermieheizanlage (4) für jedes der Gebäude (3) mit jeweils einer Erdbodenschleife (21) und einer Hausschleife (22), die über eine Wärmepumpe (20), welche einen Verdichter (28) und einen Verflüssiger (29) umfasst, miteinander gekoppelt sind, einem Wärmeerzeuger (23), der einen elektrischen Anschluss an das öffentliche Stromnetz (2) aufweist und ein Wärmemedium auf oberhalb der Erdbodentemperatur erwärmt, wobei der Wärmeerzeuger (23) wahlweise mit der Erdbodenschleife (21) oder der Hausschleife (22) wärmeleitend in Verbindung steht und Wärme aus dem erwärmten Wärmemedium an den Erdboden abgebbar und nachfolgend wieder entnehmbar ist, wobei das Heizsystem derart eingerichtet ist, dass die Wärme zunächst an die Hausschleife (22) und nach Erreichen einer Solltemperatur im Haus (3) an die Erdbodenschleife (21) abgebbar ist und der Wärmeerzeuger (23) in den Wärmepumpenkreislauf integriert ist und die Wärme über den Verflüssiger (29) an die Hausschleife abgegeben wird, **dadurch gekennzeichnet, dass** der Wärmeerzeuger (23) mit dem Verdichter (28) der Wärmepumpe (20) zusammenfällt und die Hausschleife (22) und die Erdbodenschleife (21) mittels primärer steuerbaren Ventile (44) und sekundärer steuerbarer Ventile (41) über Verbindungsleitungen (45) miteinander verbunden sind und das Heizsystem derart eingerichtet ist, dass in einem Speichermodus die sekundären steuerbaren Ventile (41) in eine zweite Stellung gebracht sind und die Hausschleife (22) geschlossen ist und die Verbindungsleitungen (45) zur Erdbodenschleife (21) geöffnet sind, wodurch das erwärmte Wärmemedium über die primären steuerbaren Ventile (44) und die Verbindungsleitungen (45) je mittels einer primären Pumpe (24) durch die Erdbodenschleife (21) und der Erdboden (5) pumpbar ist und dort Wärme an den Erdboden abgibt, und in einem Heizmodus die primären steuerbaren Ventile (44) und sekundären steuerbaren Ventile (41) in eine erste Stellung gebracht sind und die Hausschleife geöffnet ist und Verbindungsleitungen (45) geschlossen sind und Wärme über den Verflüssiger (29) an die Hausschleife (22) abgegeben wird.

5. Heizsystem nach Anspruch 4,
**dadurch gekennzeichnet, dass** ein Wärmemengenzähler (60) am Wärmeerzeuger (23) vorgesehen ist und ein weiterer Wärmemengenzähler (61) in der Hausschleife (22) vorgesehen ist.

6. Heizsystem nach einem der Ansprüche 4 oder 5,
**dadurch gekennzeichnet, dass** ein Bypass (50) in der Erdbodenschleife (21) angeordnet ist und ein Temperaturfühler (51) in der Erdbodenschleife (21) vorgesehen ist, die über eine intelligente Steuerung (70) miteinander verbunden sind.

## Claims

1. Method for heating a plurality of buildings (3) each with a geothermal heating system (4) with a heat pump (20) which couples a ground loop (21) and a house loop (22) via a heat pump circuit, and
in which electricity is fed into a public electricity grid (2) and
electricity is taken from the public electricity grid (2) and a heat generator (23) is operated with the electricity and
the heat generator (23) heats a heat medium and
the heat medium is brought to a temperature above a ground temperature and
heat is supplied to the ground loop (21) and
via the ground loop (21) the heat is released to the ground (5) for storage, which is subsequently extracted from the ground again via the ground loop (21),
wherein the heat initially heats the house loop (22) and, after a setpoint temperature has been reached in the house (3), heats the ground loop (21) and the heat generator (23) is integrated into the heat pump circuit and the heat is delivered to the house loop (22) via a condenser (29), **characterised in that** the heat generator (23) coincides with a compressor (28) of the heat pump (20) and the heat is delivered to the ground loop (21) via the condenser (29).
the house loop (22) and the ground loop (21) are interconnected by means of primary controllable valves (44) and secondary controllable valves (41) via interconnecting lines (45) and in a storage mode
the secondary controllable valves (41) are moved to a second position and close the house loop (22) and open the connecting pipes (45) to the ground loop (21), whereby the heated heat medium via the primary controllable valves (44) and the connecting pipes (45) are each pumped by means of a primary pump (24) through the ground loop (21) and the ground (5), where they release heat to the ground, and
in a heating mode, the primary controllable valves (44) and secondary controllable valves (41) are brought to a first position and the house loop is opened and connecting lines (45) are closed and heat is delivered to the house loop via the condenser (29).

2. The method according to claim 1,
**characterised in that** the ground loop (21) can be short-circuited by a bypass (50) so as not to exceed a compatibility temperature of the heat pump (20).

3. Method according to one of the preceding claims,
**characterised in that** a period of time is predetermined and an energy input into the ground (5) is measured by means of a heat meter (60) and is matched to an energy output from the ground (5), which is measured by means of a further heat meter (61).

4. A heating system for a plurality of buildings (3) for carrying out the method according to claim 1, comprising
an electricity generator and its connection to a public electricity grid (2) and
a geothermal heating system (4) for each of the buildings (3), each comprising an earth loop (21) and a house loop (22) coupled to each other via a heat pump (20) comprising a compressor (28) and a condenser (29),
a heat generator (23) which has an electrical connection to the public power supply system
(2) and heats a heat medium to above the ground temperature, wherein the heat generator (23) is selectively connected in a heat-conducting manner to the ground loop (21) or to the house loop (22) and heat from the heated heat medium can be released to the ground and subsequently removed again, wherein the heating system is arranged in such a manner that the heat can initially be delivered to the house loop (22) and, after reaching a setpoint temperature in the house (3), to the ground loop (21), and the heat generator (23) is integrated into the heat pump circuit and the heat is delivered to the house loop via the condenser (29), **characterised in that** that the heat generator (23) coincides with the compressor (28) of the heat pump (20) and the house loop (22) and the ground loop (21) are connected to each other by means of primary controllable valves (44) and secondary controllable valves (41) via connecting pipes (45) and the heating system is arranged in such a way that in a storage mode the secondary controllable valves (41) are brought into a second position and the house loop (22) is closed and the connection lines (45) to the ground loop (21) are opened, whereby the heated heat medium can be pumped via the primary controllable valves (44) and the connection lines (45) each by means of a primary pump (24) through the ground loop (21) and the ground (5) and there releases heat to the ground, and
in a heating mode, the primary controllable valves (44) and secondary controllable valves (41) are set to a first position and the house loop is open and connecting lines (45) are closed and heat is delivered to the house loop (22) via the condenser (29).

5. Heating system according to claim 4,
**characterised in that** a heat quantity meter (60) is provided at the heat generator (23) and a further heat quantity meter (61) is provided in the house loop (22).

6. Heating system according to one of claims 4 or 5,
**characterised in that** a bypass (50) is arranged in the ground loop (21) and a temperature sensor (51) is provided in the ground loop (21), which are interconnected via an intelligent control (70).

## Revendications

1. Procédé pour le chauffage d'une pluralité de bâtiments (3) avec chacun une installation de chauffage géothermique (4) avec une pompe à chaleur (20) qui couple une boucle du sol (21) et une boucle du bâtiment (22) par un circuit de pompe à chaleur et
dans lequel du courant est injecté dans un réseau public d'électricité (2) et du courant est prélevé du réseau public d'électricité (2) et un générateur de chaleur (23) fonctionne avec le courant et
le générateur de chaleur (23) réchauffe un milieu chauffant et
le milieu chauffant est amené à une température supérieure à une température du sol et
de la chaleur étant amenée à la boucle du sol (21) et
la chaleur étant transférée au sol par la boucle du sol (21) pour stockage, chaleur qui est à nouveau prélevée du sol ensuite par la boucle du sol (21),
cependant que la chaleur réchauffe tout d'abord la boucle du bâtiment (22) et, après avoir atteint une température nominale dans le bâtiment (3), réchauffe la boucle du sol, et le générateur de chaleur (23) étant intégré dans le circuit de pompe à chaleur et la chaleur étant transférée à la boucle du bâtiment (22) par un liquéfacteur (29), **caractérisé en ce que** le générateur de chaleur (23) coïncide avec un compresseur (28) de la pompe à chaleur (20), et la boucle du bâtiment (22) et la boucle du sol (21) sont reliées l'une à l'autre par des conduites de liaison (45) au moyen de soupapes primaires pouvant être commandées (44) et de soupapes secondaires pouvant être commandées (41) et, dans un mode stockage, les soupapes secondaires pouvant être commandées (41) étant amenées dans une seconde position et fermant la boucle du bâtiment (22) et ouvrant les conduites de liaison (45) vers la boucle du sol (21) si bien que le milieu chauffant réchauffé est pompé par les soupapes primaires pouvant être commandées (44) et les conduites de liaison (45) au moyen d'une pompe primaire chaque dans la boucle du sol (21) et le sol (5) et de la chaleur y étant transférée au sol et, dans un mode chauffage, les soupapes primaires pouvant être commandées (44) et les soupapes secondaires pouvant être commandées (41) sont amenées dans une première position et la boucle du bâtiment s'ouvre et des conduites de liaison (45) se ferment et de la chaleur est transférée par le liquéfacteur (29) à la boucle du bâtiment.

2. Procédé selon la revendication 1,
**caractérisé en ce que** la boucle du sol (21) peut être court-circuitée par un by-pass (50) pour ne pas dépasser une température de compatibilité de la pompe à chaleur (20).

3. Procédé selon l'une des revendications précédentes,
**caractérisé en ce qu'**une période est prédéterminée et un apport d'énergie dans le sol (5) est mesuré au moyen d'un calorimètre (60) et est aligné sur un apport d'énergie provenant du sol (5) qui est mesuré au moyen d'un autre calorimètre (61).

4. Système de chauffage pour une pluralité de bâtiments (3) pour réaliser le procédé selon le procédé 1 avec
une production de courant et son raccord à un réseau public d'électricité (2) et
une installation de chauffage géothermique (4) pour chacun des bâtiments (3) avec chacune une boucle de sol (21) et une boucle de bâtiment (22) qui sont couplées l'une à l'autre par une pompe à chaleur (20) qui comprend un compresseur (28) et un liquéfacteur (29),
un générateur de chaleur (23) qui présente un branchement électrique au réseau public d'électricité (2) et qui réchauffe un milieu chauffant à une température supérieure à la température du sol, cependant que le générateur de chaleur (23) est en relation conductrice de chaleur au choix avec la boucle du sol (21) ou la boucle du bâtiment (22) et de la chaleur provenant du milieu chauffant réchauffé peut être transférée au sol et peut ensuite en être à nouveau prélevée, cependant que le système de chauffage est agencé de telle manière que la chaleur peut tout d'abord être transférée à la boucle du bâtiment (22) et, après avoir atteint une température nominale dans le bâtiment (3), peut être transférée à la boucle de sol (21) et le générateur de chaleur (23) est intégré dans le circuit de pompe à chaleur et la chaleur est transférée à la boucle du bâtiment (22) par le liquéfacteur (29),
**caractérisé en ce que** le générateur de chaleur (23) coïncide avec le compresseur (28) de la pompe à chaleur (20) et la boucle du bâtiment (22) et la boucle du sol (21) sont reliées l'une à l'autre par des conduites de liaison (45) au moyen de soupapes primaires pouvant être commandées (44) et de soupapes secondaires pouvant être commandées (41) et le système de chauffage est agencé de telle manière que, dans un mode stockage, les soupapes secondaires pouvant être commandées (41) sont amenées dans une seconde position et la boucle du bâtiment (22) est fermée et les conduites de liaison (45) vers la boucle du sol (21) sont ouvertes si bien que le milieu chauffant réchauffé peut être pompé par les soupapes primaires pouvant être commandées (44) et les conduites de liaison (45) au moyen d'une pompe primaire (24) chaque dans la boucle du sol (21) et le sol (5), et de la chaleur y est transférée au sol et, dans un mode chauffage, les soupapes primaires pouvant être commandées (44) et les soupapes secondaires pouvant être commandées (41) sont amenées dans une première position et la boucle du bâtiment est ouverte et des conduites de liaison (45) sont fermées et de la chaleur est transférée par le liquéfacteur (29) à la boucle du bâtiment (22).

5. Système de chauffage selon la revendication 4,
**caractérisé en ce qu'**il est prévu un calorimètre (60) sur le générateur de chaleur (23) et qu'il est prévu un autre calorimètre (61) dans la boucle du bâtiment (22).

6. Système de chauffage selon l'une des revendications 4 ou 5,
**caractérisé en ce qu'**un by-pass (50) est placé dans la boucle du sol (21) et une sonde de température (51) est prévue dans la boucle du sol (21), lesquels sont reliés l'un à l'autre par une commande intelligente (70).
